(19) Europäisches Patentamt
European Patent Office
Office européen des brevets

(11) **EP 4 389 564 A1**

(12) **EUROPEAN PATENT APPLICATION**

(43) Date of publication:
**26.06.2024 Bulletin 2024/26**

(21) Application number: **22215453.6**

(22) Date of filing: **21.12.2022**

(51) International Patent Classification (IPC):
**B62D 7/15** (2006.01)    **B62D 5/04** (2006.01)

(52) Cooperative Patent Classification (CPC):
**B62D 7/1581;** B60G 2500/30; B60G 2500/40;
B62D 5/0481; B62D 7/159

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLVO TRUCK CORPORATION
405 08 Göteborg (SE)**

(72) Inventor: **Fagergren, Mats
442 35 Kungälv (SE)**

(74) Representative: **Valea AB
Box 1098
405 23 Göteborg (SE)**

(54) **A METHOD FOR CHANGING A STEERING ANGLE OF A STEERED WHEEL OF A VEHICLE**

(57)    A computer-implemented method for changing a steering angle ($\alpha$) of a steered wheel (10, 12) of a vehicle (1), the steered wheel (10, 12) being connected to a steering actuator (20) adapted to change the steering angle ($\alpha$) of the steered wheel (10, 12), the steering actuator (20) having a steering actuator capacity threshold, the method comprising:

- modifying (S6), by the processor device (602), a condition of the vehicle (1) relevant for the target steering angle displacement ($\alpha$). The disclosure further relates to a computer system (600), a vehicle (1), a computer program, a control system and a non-transitory computer readable storage medium.

FIG. 2

## Description

## TECHNICAL FIELD

The disclosure relates generally to changing of a steering angle of a steered wheel of a vehicle. In particular aspects, the disclosure relates to a computer system comprising a processor device for changing a steering angle of a steered wheel of a vehicle, a computer-implemented method for changing a steering angle of a steered wheel of a vehicle, a vehicle, a computer program product, a control system and a non-transitory computer-readable storage medium. The disclosure can be applied in heavy-duty vehicles, such as trucks, buses, and construction equipment. Although the disclosure may be described with respect to a particular vehicle, the disclosure is not restricted to any particular vehicle.

## BACKGROUND

A vehicle typically comprises one or more steered wheels for steering the vehicle along a path during driving. For example, in addition to steered front wheels, some vehicles may comprise auxiliary steered wheels for e.g. improving the turning radius and/or for stabilizing vehicle movement during high-speed driving.

To this end, it is known to equip larger and heavier vehicles, such as trucks, buses and construction equipment, with auxiliary steered wheels which for example may be used for reducing the turning radius, such as when the vehicle is driving in confined spaces. The auxiliary steered wheel(s) may for example be located on a rear axle of the vehicle and/or in the proximity of the main steered wheels at the front of the vehicle.

The steered wheels may be operated by use of a steering actuator of a steering system.

Even though it is known to operate a steered wheel, such as an auxiliary steered wheel, by use of a steering actuator, there is still a strive to develop improved technology relating to steered wheels, such as technology which results in a more cost-effective, robust and/or reliable steering function.

## SUMMARY

According to a first aspect of the disclosure, there is provided a computer system comprising a processor device for changing a steering angle of a steered wheel of a vehicle, the steered wheel being connected to a steering actuator adapted to change the steering angle of the steered wheel, the steering actuator having a steering actuator capacity threshold. The processor device is configured to:

- determine a speed value indicative of a current or predicted speed of the vehicle;.
- determine a load value indicative of a vertical load imparted on the steered wheel;

- determine a target steering angle displacement of the steered wheel;
- determine a target steering angle displacement rate of the steered wheel;
- based on the speed value, the load value, the target steering angle displacement and the target steering angle displacement rate, determine whether or not the steering actuator can effect the target steering angle displacement without exceeding the steering actuator capacity threshold;
- in response to determining that the steering actuator cannot effect the target steering angle displacement without exceeding the steering actuator capacity threshold, modify a condition of the vehicle relevant for the target steering angle displacement.

The first aspect of the disclosure may seek to provide a more cost-effective, reliable and robust steering function for a steered wheel of a vehicle. A technical benefit may include a reduced power need for the steering actuator. This can be achieved while still being able to effect steering also in more demanding situations, such as when the vehicle is standing still or driving at low speeds. In addition, by the provision of the computer system according to the first aspect of the disclosure, a more reliable steering function may be achieved, since too high steering actuator forces for effectuating the target steering angle displacement at zero or low speeds may be avoided. For example, if the steering actuator is driven by electric power from an electric power system of the vehicle, too high steering actuator forces may result in power peaks. Too high power peaks may lead to unexpected shut-down or instability of the electric power system. By the present disclosure, e.g., by modifying the condition relevant for the target steering angle displacement as disclosed herein, such situations may be avoided.

According to a second aspect of the disclosure, there is provided a computer-implemented method for changing a steering angle of a steered wheel of a vehicle, the steered wheel being connected to a steering actuator adapted to change the steering angle of the steered wheel, the steering actuator having a steering actuator capacity threshold. The method comprises:

- determining, by a processor device of a computer system, a speed value indicative of a current or predicted speed of the vehicle;
- determining, by the processor device, a load value indicative of a vertical load imparted on the steered wheel;
- determining, by the processor device, a target steering angle displacement of the steered wheel;
- determining, by the processor device, a target steering angle displacement rate of the steered wheel;
- based on the speed value, the load value, the target steering angle displacement and the target steering angle displacement rate, determining, by the processor device, whether or not the steering actuator can effect the target steering angle displacement without exceeding the steering actuator capacity threshold;

- in response to determining that the steering actuator cannot effect the target steering angle displacement without exceeding the steering actuator capacity threshold, modifying, by the processor device, a condition of the vehicle relevant for the target steering angle displacement.

Advantages and effects of the second aspect of the disclosure are analogous to the advantages and effects of the first aspect of the disclosure, and vice versa. It shall also be noted that all examples of the second aspect of the disclosure are combinable with and applicable to all examples of the first aspect of the disclosure, and vice versa.

In some examples, the method further comprises operating, by the processor device, the steering actuator to effect the target steering angle displacement. Thereby, the steering actuator may be operated with the modified condition relevant for the target steering angle displacement. As such, this implies a cost-effective, reliable and robust steering function.

In some examples, the condition of the vehicle relevant for the target steering angle displacement is modified so that the steering actuator capacity threshold is not exceeded when the steering actuator effects the target steering angle displacement. Thereby, the risk of unwanted shut-down and/or instability of for example the above-mentioned electric power system may be mitigated.

In some examples, modifying the condition of the vehicle relevant for the target steering angle displacement comprises reducing the vertical load imparted on the steered wheel by operating a wheel suspension system associated with the steered wheel. Thereby, by the reduced vertical load, the risk of exceeding the steering actuator capacity threshold may be reduced or avoided.

In some examples, modifying the condition of the vehicle relevant for the target steering angle displacement comprises reducing the target steering angle displacement rate. Thereby, by the reduced target steering angle displacement rate, which also may be denoted reduced target steering angle displacement speed, the risk of exceeding the steering actuator capacity threshold may be reduced or avoided. Modifying the condition of the vehicle relevant for the target steering angle displacement may comprise reducing the vertical load imparted on the steered wheel by operating the wheel suspension system associated with the steered wheel and/or reducing the target steering angle displacement rate.

In some examples, the method comprises:

- determining, by the processor device, whether or not the steering actuator capacity threshold is still exceeded when the vertical load imparted on the steered wheel is reduced, and;
- in response to determining that the steering actuator capacity threshold is still exceeded, modifying the condition of the vehicle relevant for the target steering angle displacement by reducing the target steering angle displacement rate. Thereby, a yet further reliable and robust steering function may be obtained, e.g., by further reducing the risk that the steering actuator capacity threshold is exceeded.

In some examples, the method comprises:

- determining, by the processor device, whether or not the steering actuator capacity threshold is still exceeded when the target steering displacement rate is reduced, and;
- in response to determining that the steering actuator capacity threshold is still exceeded, modifying the condition of the vehicle relevant for the target steering angle displacement by reducing the vertical load imparted on the steered wheel by operating the wheel suspension system associated with the steered wheel. Thereby, a yet further reliable and robust steering function may be obtained, e.g., by further reducing the risk that the steering actuator capacity threshold is exceeded.

In some examples, the steering actuator capacity threshold relates to a power threshold for the steering actuator and/or a current threshold for the steering actuator. For example, the present disclosure is based on an understanding that an electrically powered steering actuator which operates the steered wheel at zero or low speeds of the vehicle may generate high power peaks, or high current peaks. By the present disclosure, such power peaks and/or current peaks may be reduced, and/or a magnitude of such power peaks and/or current peaks may be reduced. As such, a more reliable, robust and cost-effective steering function may be obtained. The steering actuator capacity threshold may additionally or alternatively relate to at least one of hydraulic pressure threshold for the steering actuator, a pneumatic pressure threshold for the steering actuator, a force threshold for the steering actuator, and a torque threshold for the steering actuator.

In some examples, the steered wheel is an auxiliary steered wheel of the vehicle. By an auxiliary steered wheel is herein meant a steered wheel which is not part of the main steering function of the vehicle, but is rather part of an auxiliary steering function for assisting the main steering function and/or for providing improved vehicle stability, e.g. when driving at higher speeds, such as speeds exceeding 50 km/h. For example, the auxiliary steered wheel may be used for reducing a vehicle turning radius, e.g., when driving at low speeds and/or in narrow spaces.

In some examples, the auxiliary steered wheel is associated with and located forward and/or rearwards of a rear drive axle of the vehicle or associated with and located rearwards of a front axle of the vehicle.

In some examples, the steering actuator is an electrically powered steering actuator, such as an electromechanical steering actuator or an electrically powered hydraulic steering actuator

In some examples, the method is configured to change a steering angle of more than one steered wheel as disclosed herein, wherein each steered wheel is provided on a respective wheel axle of the vehicle and connected to a respective steering actuator adapted to change the steering angle of the respective steered wheel, and wherein each steered wheel is controlled by examples of the method as disclosed herein. For example, each steered wheel may be controlled individually by examples of the method as disclosed herein. Still further, each steered wheel may be controlled individually and/or in dependence on a common current or power threshold for the steering actuators. Thereby, a more versatile control of steering angles of respective steering wheels may be obtained. For example, each steered wheel may be individually controlled in respect of individual conditions for each respective wheel axle, and/or in respect of a common power/current threshold for an electric power system which powers the steering actuators.

In some examples, the vehicle has a normal condition relevant for the target steering angle displacement, wherein the method further comprises:

- after the condition of the vehicle relevant for the target steering angle displacement has been modified, remodifying, by the processor device, the condition of the vehicle to the normal condition when a current speed of the vehicle exceeds a vehicle speed threshold. It has further been realized that when the vehicle is driving at speeds above the vehicle speed threshold, the risk of exceeding the steering actuator capacity threshold is reduced. Thereby, there may no longer be any need to operate the vehicle with the modified condition of the vehicle relevant for the target steering angle displacement. For example, the speed threshold may correspond to a vehicle speed of 5 km/h, 10 km/h, 15 km/h, 20 km/h, 25 km/h or 30 km/h.

According to a third aspect of the disclosure, there is provided a vehicle comprising a steered wheel and a steering actuator, the steered wheel being connected to the steering actuator and the steering actuator being adapted to change the steering angle of the steered wheel, wherein the steering actuator has a steering actuator capacity threshold, and wherein the vehicle further comprises a processor device configured to perform the method of any one of the examples of the second aspect of the disclosure.

Advantages and effects of the third aspect of the disclosure are analogous to the advantages and effects of the first and second aspects of the disclosure, and vice versa. It shall also be noted that all examples of the third aspect of the disclosure are combinable with and applicable to all examples of the first and second aspects of the disclosure, and vice versa.

The vehicle may be any one of a truck, a bus and a construction equipment, such as a wheel loader, a dump truck and an excavator. The vehicle may in some examples be a passenger car. For example, the present disclosure has been found to be especially useful for heavier vehicles, such as heavy-duty trucks, where it may be difficult to effectuate steering angle changes at zero or low speeds without exceeding a steering actuator capacity threshold.

According to a fourth aspect of the disclosure, there is provided a computer program product comprising program code for performing, when executed by a processor device, the method of any one of the examples of the second aspect of the disclosure.

According to a fifth aspect of the disclosure, there is provided a control system comprising one or more control units configured to perform the method of any one of the examples of the second aspect of the disclosure.

According to a sixth aspect of the disclosure, there is provided a non-transitory computer-readable storage medium comprising instructions, which when executed by a processor device, cause the processor device to perform the method of any one of the examples of the second aspect of the disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

## BRIEF DESCRIPTION OF THE DRAWINGS

With reference to the appended drawings, below follows a more detailed description of aspects of the disclosure cited as examples.

**FIG. 1** is a perspective view of a vehicle according to an example of the present disclosure.

**FIG. 2** is a schematic view of a vehicle according to an example of the present disclosure.

**FIG. 3** is a flowchart of a method according to an example of the disclosure.

**FIG. 4** is a graph illustrating power level and current level in relation to vehicle speed according to an example of the present disclosure.

**FIG. 5** is a graph illustrating a steering actuator force in relation to vehicle speed according to an example of the disclosure.

**FIGS. 6a-c** are schematic views of different vehicle configurations according to examples of the present disclosure.

**FIG. 7** is a schematic diagram of an exemplary computer system for implementing examples disclosed herein, according to one example.

The drawings show diagrammatic exemplifying examples of the present disclosure and are thus not necessarily drawn to scale. It shall be noted that some details in the drawings may be exaggerated in order to better describe and illustrate the disclosure. Like reference characters refer to like elements throughout the description, unless expressed otherwise.

**DETAILED DESCRIPTION**

Aspects set forth below represent the necessary information to enable those skilled in the art to practice the disclosure.

An aim of the present disclosure is to provide a cost-effective, reliable and robust steering function for a vehicle, such as for an auxiliary steered wheel of the vehicle. As such, an aim of the disclosure is to provide at least one of a computer system, a computer-implemented method, a vehicle, a computer program product, a control system and a non-transitory computer-readable medium, which alleviates at least one drawback of the prior art, or which at least provides a suitable alternative.

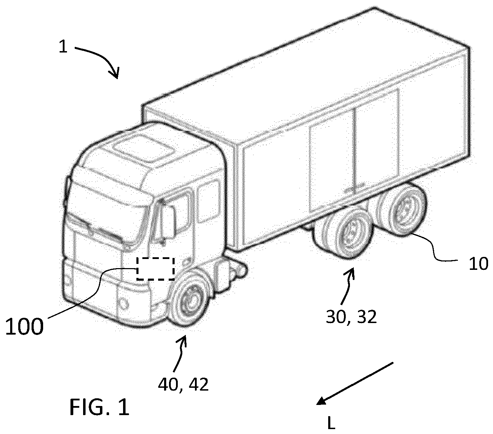

FIG. 1 depicts a perspective view of a vehicle 1 according to an example of the present disclosure. The vehicle 1 is herein a heavy-duty truck. It shall however be noted that the vehicle may be any other type of vehicle which uses a steered wheel as disclosed herein. For example, the vehicle may be any one of a bus, a working machine, and a passenger car. In some examples, the vehicle may be a trailer, such as a trailer for a truck, which comprises at least one steered wheel.

The vehicle 1 comprises a front axle 40 with steered wheels 42. The vehicle 1 further comprises a rear drive axle 30 with drive wheels 32. The vehicle 1 further comprises a steered wheel 10, which in this example is associated with and located rearwards of the rear drive axle 30, as seen in a forward travelling direction L of the vehicle 1. The forward travelling direction L corresponds to a longitudinal direction of the vehicle 1. In the shown example, the steered wheel 10 is an auxiliary steered wheel 10 of the vehicle 1.

The vehicle 1 further comprises a control unit 100 which is configured to perform a method as disclosed herein. The control unit 100 may be part of a control system and may be an electronic control unit comprising processing circuitry for performing the method described herein. The control unit 100 may be a computer. The control unit 100 may comprise hardware or hardware and software. The control unit 100 may comprise a processor, memory, transmitter, receiver etc. The control unit 100 may comprise one or more control units. The control unit 100 may comprise a processor device of a computer system.

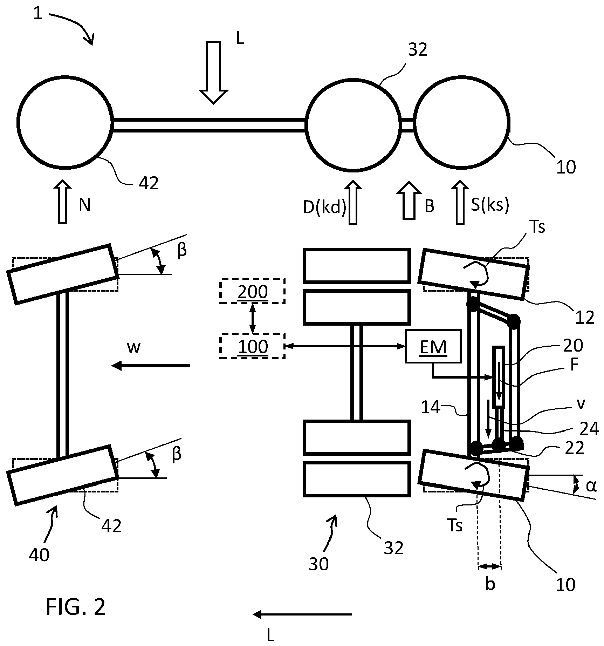

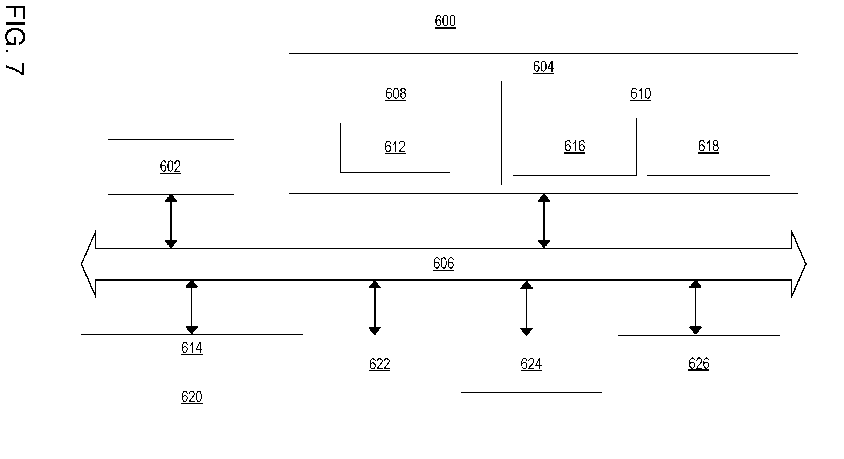

FIG. 2 depicts a schematic view of a vehicle 1 according to an example of the present disclosure. The vehicle 1 in FIG. 2 may for example be the vehicle 1 as shown in FIG. 1. The steered wheels 42 of the front axle 40 may for example be displaced by an angle $\beta$, as may be gleaned in FIG. 2. In the shown example, the vehicle 1 comprises a steered wheel 10 and a steered wheel 12 (i.e. another auxiliary steered wheel) which are provided on a common wheel axle 14. The vehicle 1 further comprises a steering actuator 20. The steered wheel 10 is connected to the steering actuator 20. In this example, the steered wheel 12 is also connected to the steering actuator 20. The steering actuator 20 is adapted to change a steering angle $\alpha$ of the respective steered wheel 10, 12. As shown, the steering actuator 20 may be connected to the respective steered wheel 10, 12 via a steering arm 22. Furthermore, the steering actuator 20 has a steering actuator capacity threshold. The vehicle 1 further comprises a processor device 602 configured to perform the method of any one of the examples as disclosed herein. The processor device 602 may for example be the above-mentioned control unit 100, and/or the processor device 602 may be part of the control unit 100. The processor device 602 is further described in the below with reference to FIG. 7.

The vehicle 1 may as shown further comprise at least one electric motor EM for operating the steering actuator 20. As such, for example, the steering actuator 20 may be an electrically powered steering actuator, such as an electromechanical steering actuator or an electrically powered hydraulic steering actuator. Accordingly, the electrically powered steering actuator 20 may be powered by an electric power system (not shown).

As further shown, the vehicle 1 may further comprise a wheel suspension system 200 which is associated with the steered wheels 10, 12.

The control unit 100 is preferably in communicative contact with the electric motor EM and/or the wheel suspension system 200, such as by a wired and/or wireless connection interface. The connection interface is herein indicated by the arrows between the control unit 100 and the wheel suspension system 200, and between the control unit 100 and the electric motor EM. The connection interface is configured for operating the wheel suspension system 200 and/or the electric motor EM.

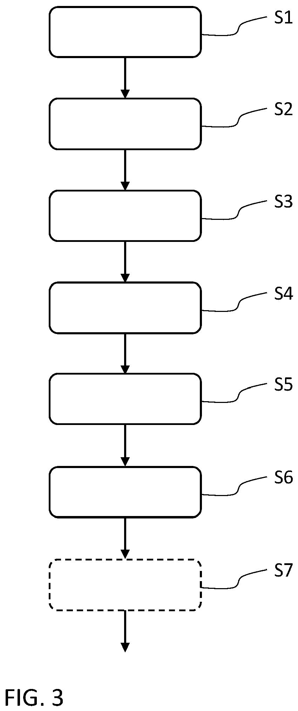

Fig. 3 depicts a flowchart of a method according to an example of the present disclosure. Accordingly, the method is a computer-implemented method for changing a steering angle α of a steered wheel 10, 12 of a vehicle 1. The vehicle 1 may thus be the vehicle 1 as shown in FIGS. 1 and 2. It shall be noted that the steps of the method may be performed in any suitable order, and not only as depicted in FIG. 3.

Referring to e.g. FIGS. 2 and 3, the method comprises:

S 1: determining, by a processor device 602 of a computer system 600, a speed value w indicative of a current or predicted speed of the vehicle 1. The predicted speed may for example be predicted based on a speed request by a user, such as when pressing a gas pedal (not shown). Additionally or alternatively, the predicted speed may be based on a speed request from an autonomous driving system and/or a driver assistance system (not shown) of the vehicle 1.

The method further comprises:

S2: determining, by the processor device 602, a load value S(ks) indicative of a vertical load imparted on the steered wheel 10. It shall be understood that the same or similar approach may also be done for the steered wheel 12. For example, the load value S(ks) may be indicative of a vertical load imparted on the wheel axle 14. The load value S(ks) may for example be obtained by use of a load sensor (not shown).

The method further comprises:

S3: determining, by the processor device 602, a target steering angle displacement α of the steered wheel 10. The target steering angle displacement α may for example be obtained by a steering system (not shown) of the vehicle 1. The target steering angle displacement α may for example be used for reducing a turning radius of the vehicle 1.

The method further comprises:

S4: determining, by the processor device 602, a target steering angle displacement rate v of the steered wheel 10. The target steering angle displacement rate v may also for example be obtained by the above-mentioned steering system of the vehicle 1.

The method further comprises:

- based on the speed value w, the load value S(ks), the target steering angle displacement α and the target steering angle displacement rate v,
  S5: determining, by the processor device 602, whether or not the steering actuator 20 can effect the target steering angle displacement α without exceeding the steering actuator capacity threshold; and
- in response to determining that the steering actuator 20 cannot effect the target steering angle displacement α without exceeding the steering actuator capacity threshold,
  S6: modifying, by the processor device 602, a condition of the vehicle 1 relevant for the target steering angle displacement α.

The method may as shown in FIG. 3 further comprise (indicated by a dashed box): S7: operating, by the processor device 602, the steering actuator 20 to effect the target steering angle displacement α. Accordingly, the steering actuator 20 may be operated with the modified condition of the vehicle 1 relevant for the target steering angle displacement α.

For example, the condition of the vehicle 1 relevant for the target steering angle displacement α may be modified so that the steering actuator capacity threshold is not exceeded when the steering actuator 20 effects the target steering angle displacement α.

Modifying the condition of the vehicle 1 relevant for the target steering angle displacement α may comprise reducing the vertical load S(ks) imparted on the steered wheel 10 by operating the wheel suspension system 200 associated with the steered wheel 10.

Additionally, or alternatively, modifying the condition of the vehicle 1 relevant for the target steering angle displacement α may comprise reducing the target steering angle displacement rate v.

The method may further comprise:

- determining, by the processor device 602, whether or not the steering actuator capacity threshold is still exceeded when the vertical load S(ks) imparted on the steered wheel 10 is reduced, and;
- in response to determining that the steering actuator capacity threshold is still exceeded, modifying the condition of the vehicle 1 relevant for the target steering angle displacement α by reducing the target steering angle displacement rate v. Accordingly, modifying of the condition of the vehicle 1 relevant for the target steering angle displacement α may be done in a sequential order. It shall also be noted that the sequence of modifying the conditions of the vehicle 1 relevant for the target steering angle displacement α may be done in opposite order. In alternative examples, modifying the conditions of the vehicle 1 relevant for the target steering angle displacement α may be done simultaneously, or at least partially simultaneously.

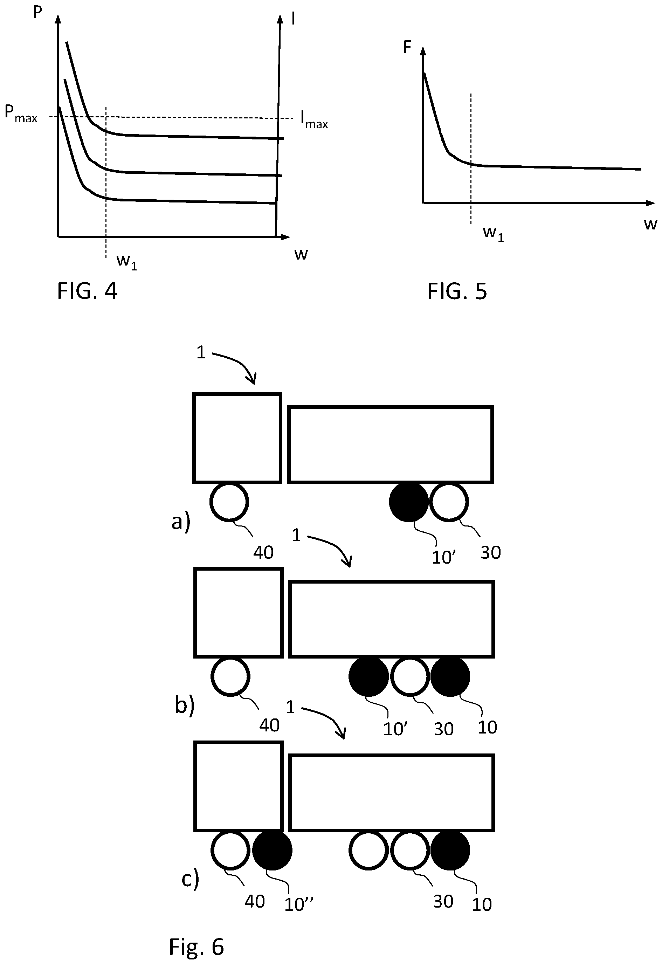

The steering actuator capacity threshold may relate to a power threshold Pmax for the steering actuator 20 and/or a current threshold Imax for the steering actuator 20. In this respect, reference is made to FIG. 4. In FIG. 4, power level P, such as expressed in Watts, and current level I, such as expressed in Ampere, are represented as respective y-axes in the graph. The power level P and the current level I relate to required power and/or current for effectuating a target steering angle displacement α by the steering actuator 20. The x-axis represents vehicle speed w. As shown, the power level P and/or the current level I for the steering actuator 20 typically increases with a lower vehicle speed w. The power level P and/or the current level I for the steering actuator 20 typically increases rapidly after the vehicle speed w falls below a vehicle speed threshold w1 for the vehicle 1. The vehicle speed threshold w1 may for example be in the range of 3-10 km/h, such as 3-6 km/h, for example 5 km/h.

In a similar vein, FIG. 5 represents a force F for the steering actuator 20 for effectuating a target steering angle displacement α. As for the power level P and the current level I as mentioned in the above, the force F typically increases rapidly after the vehicle speed w falls below the vehicle speed threshold w1 for the vehicle 1.

With reference to especially FIGS. 2, 4 and 5, an example of how to modify a condition of the vehicle 1 relevant for the target steering angle displacement α will be described.

A load L of the vehicle 1 is distributed between the front axle 40, the rear drive axle 30 and the common wheel axle 14. The load L is accommodated by a normal force N at the front axle 40, and by a normal force B at the rear drive axle 30 and the common wheel axle 14. Accordingly, L = N + B.

The normal force B is distributed between the rear drive axle 30 and the common wheel axle 14, represented as D(kd) and S(ks) in FIG. 2. Accordingly, B = D(kd) + S(ks). The normal force S(ks) corresponds to a load value indicative of a vertical load imparted on the respective steered wheel 10, 12. The references kd and ks may for example represent a respective stiffness value of the wheel suspension system 200, which stiffness values may be controlled so that the load B is distributed differently between the rear drive axle 30 and the common wheel axle 14.

Current I required for actuating the steering actuator 20 may be expressed as follows:

$$I = P/U$$

where U is voltage level and P is the above-mentioned power level.

Power P required for actuating the steering actuator 20 may be expressed as follows:

$$P = F * v$$

where v is steering actuator speed v, for example expressed in m/s, and where F is the above-mentioned force for the steering actuator 20. The steering actuator speed v may typically be a speed of a steering cylinder 24 of the steering actuator 20. The steering actuator speed v corresponds to the herein mentioned steering angle displacement rate.

The force F may be expressed as follows:

$$F = ((2 * Ts) / b) * c$$

where Ts is steering torque, b is a distance representing a longitudinal distance between the steering actuator 20 and a center point of each respective steered wheel 10, 12, and c is a constant. Accordingly, b represents a lever arm distance between the steering actuator 20 and the respective steered wheel 10, 12. The constant c may for example be associated with vehicle geometry, such as associated with a camber and/or caster angle of the respective steered wheel 10, 12.

The steering torque Ts can be expressed as a function of the normal force S(ks), i.e. the load value indicative of the vertical load imparted on the steered wheel 10, 12, at the common wheel axle 14, the vehicle speed w, the steering angle displacement α, and a friction coefficient μ associated with the contact between the respective steered wheels 10, 12 and a ground surface. Accordingly, the steering torque Ts can be expressed as follows:

$$Ts = f(S(ks), w, \alpha, \mu)$$

The load value S(ks) may be expressed as follows:

$$S(ks) = L - N - D(kd)$$

Accordingly, if the load value S(ks) is reduced it will lead to an increased normal force D(kd). Furthermore, and in view of the above, the steering torque Ts is proportional to the load value S(ks). As such, if lowering the load value S(ks), e.g., by changing the stiffness value ks, the steering torque Ts will also be reduced. Due to the fact that the steering torque Ts is proportional to the force F and that the force F is proportional to the power level P and the current level I, reduction of the load value S(ks) will inevitably lead to a reduced power level P and current level I. Additionally, or alternatively, in view of the above described relationships, reduction of the steering actuator speed v, i.e. the steering actuator displacement rate, will also inevitably lead to a reduced power level P and current level I.

Accordingly, the method as disclosed herein may be controlled by use of the above-mentioned relationship between power level P and/or current level I, steering torque Ts, force F, steering displacement rate v, load value S(ks), vehicle speed w, steering angle displacement α, and also e.g., by use of the friction coefficient μ.

The vehicle 1 may have a normal condition relevant for the target steering angle displacement α. As such, the method may further comprise:

- after the condition of the vehicle 1 relevant for the target steering angle displacement α has been modified, remodifying, by the processor device 602, the condition of the vehicle 1 to the normal condition when a current speed of the vehicle 1 exceeds a vehicle speed threshold, i.e. the above mentioned vehicle speed threshold w1. The normal condition may for example comprise a predefined target steering angle displacement rate corresponding to e.g., the target steering angle displacement. The normal condition may for example comprise a predefined wheel suspension configuration. The normal condition may be defined as a condition of the vehicle 1 when the steering actuator capacity threshold is not expected to be exceeded, e.g., when driving at higher speeds, such as speeds exceeding 3 or 5 km/h..

FIGS. 6a-c represent schematic views of different vehicle configurations according to examples of the present disclosure. The different configurations of the vehicle 1 show that steered wheels 10, 10', 10" may be located at different locations on the vehicle 1. In FIG. 6a, the steered wheel 10' is associated with and located rearwards of a rear drive axle 30. In FIG. 6b, steered wheels 10', 10 are associated with and located forward and rearwards of a rear drive axle 30. In FIG. 6c, a steered wheel 10" is associated with and located rearwards of a front axle 40 of the vehicle 1, and a steered wheel 10 is associated with and located rearwards of a rear drive axle 30. Each steered wheel 10, 10', 10" may be controlled individually by a method as disclosed herein, and/or controlled based on a common power threshold or current threshold.

FIG. 7 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

**Claims**

1. A computer system (600) comprising a processor device (602) for changing a steering angle ($\alpha$) of a steered wheel (10, 12) of a vehicle (1), the steered wheel (10, 12) being connected to a steering actuator (20) adapted to change the steering angle ($\alpha$) of the steered wheel (10, 12), the steering actuator (20) having a steering actuator capacity threshold, the processor device (602) being configured to:

   - determine a speed value (w) indicative of a current or predicted speed of the vehicle (1);
   - determine a load value (S(ks)) indicative of a vertical load imparted on the steered wheel (10, 12);
   - determine a target steering angle displacement ($\alpha$) of the steered wheel (10, 12);
   - determine a target steering angle displacement rate (v) of the steered wheel (10, 12);
   - based on the speed value (w), the load value (S(ks)), the target steering angle displacement ($\alpha$) and the target steering angle displacement rate (v), determine whether or not the steering actuator (20) can effect the target steering angle displacement ($\alpha$) without exceeding the steering actuator capacity threshold;
   - in response to determining that the steering actuator (20) cannot effect the target steering angle displacement ($\alpha$) without exceeding the steering actuator capacity threshold, modify a condition of the vehicle (1) relevant for the target steering angle displacement ($\alpha$).

2. A computer-implemented method for changing a steering angle ($\alpha$) of a steered wheel (10, 12) of a vehicle (1), the steered wheel (10, 12) being connected to a steering actuator (20) adapted to change the steering angle ($\alpha$) of the steered wheel (10, 12), the steering actuator (20) having a steering actuator capacity threshold, the method comprising:

   - determining (S 1), by a processor device (602) of a computer system (600), a speed value (w) indicative of a current or predicted speed of the vehicle (1);
   - determining (S2), by the processor device (602), a load value (S(ks)) indicative of a vertical load imparted on the steered wheel (10, 12);
   - determining (S3), by the processor device (602), a target steering angle displacement ($\alpha$) of the steered wheel (10, 12);
   - determining (S4), by the processor device (602), a target steering angle displacement rate (v) of the steered wheel (10, 12);
   - based on the speed value (w), the load value (S(ks)), the target steering angle displacement ($\alpha$) and the target steering angle displacement rate (v), determining (S5), by the processor device (602), whether or not the steering actuator (20) can effect the target steering angle displacement ($\alpha$) without exceeding the steering actuator capacity threshold;
   - in response to determining that the steering actuator (20) cannot effect the target steering angle displacement without exceeding the steering actuator capacity threshold, modifying (S6), by the processor device (602), a condition of the vehicle (1) relevant for the target steering angle displacement ($\alpha$).

3. The method according to claim 2, further comprising:

   - operating (S7), by the processor device (602), the steering actuator (20) to effect the target steering angle displacement ($\alpha$).

4. The method according to any one of claims 2-3, wherein the condition of the vehicle (1) relevant for the target steering angle displacement ($\alpha$) is modified so that the steering actuator capacity threshold is not exceeded when the steering actuator (20) effects the target steering angle displacement ($\alpha$).

5. The method according to any one of claims 2-4, wherein modifying the condition of the vehicle (1) relevant for the target steering angle displacement ($\alpha$) comprises reducing the vertical load imparted on the steered wheel (10, 12) by operating a wheel suspension system (200) associated with the steered wheel (10, 12).

6. The method according to any one of claims 2-5, wherein modifying the condition of the vehicle (1) relevant for the target steering angle displacement ($\alpha$) comprises reducing the target steering angle displacement rate (v).

7. The method according to claim 5, further comprising:

   - determining, by the processor device (602), whether or not the steering actuator capacity threshold is still exceeded when the vertical load imparted on the steered wheel (10, 12) is reduced, and;
   - in response to determining that the steering actuator capacity threshold is still exceeded, modifying the condition of the vehicle (1) relevant for the target steering angle displacement ($\alpha$) by reducing the target steering angle displacement rate (v).

8. The method according to any one of claims 2-7, wherein the steering actuator capacity threshold relates to a power threshold (Pmax) for the steering actuator (20) and/or a current threshold (Imax) for the steering actuator (20).

9.  The method according to any one of claims 2-8, wherein the steered wheel (10, 12) is an auxiliary steered wheel of the vehicle (1).

10. The method according to claim 9, wherein the auxiliary steered wheel (10, 12) is associated with and located forward and/or rearwards of a rear drive axle (30) of the vehicle (1) or associated with and located rearwards of a front axle (40) of the vehicle (1).

11. The method according to any one of claims 2-10, wherein the vehicle (1) has a normal condition relevant for the target steering angle displacement ($\alpha$), the method further comprising:

    - after the condition of the vehicle (1) relevant for the target steering angle displacement ($\alpha$) has been modified, remodifying, by the processor device (602), the condition of the vehicle (1) to the normal condition when a current speed of the vehicle (1) exceeds a vehicle speed threshold (wi).

12. A vehicle (1) comprising a steered wheel (10, 12) and a steering actuator (20), the steered wheel (10, 12) being connected to the steering actuator (20) and the steering actuator (20) being adapted to change the steering angle ($\alpha$) of the steered wheel (10, 12), wherein the steering actuator (20) has a steering actuator capacity threshold, and wherein the vehicle (1) further comprises a processor device (602) configured to perform the method of any one of claims 2-11.

13. A computer program product comprising program code for performing, when executed by a processor device (602), the method of any of claims 2-11.

14. A control system comprising one or more control units (100) configured to perform the method of any of claims 2-11.

15. A non-transitory computer-readable storage medium comprising instructions, which when executed by a processor device (602), cause the processor device to perform the method of any of claims 2-11.

FIG. 1

FIG. 2

FIG. 3

FIG. 4

FIG. 5

Fig. 6

FIG. 7

| | Europäisches Patentamt European Patent Office Office européen des brevets | **EUROPEAN SEARCH REPORT** | Application Number EP 22 21 5453 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/056986 A1 (WANG DEXIN [US] ET AL) 1 March 2018 (2018-03-01) | 1-4,6, 8-15 | INV. B62D7/15 |
| Y | * claims 1,11,10,20,3,13; figures 1-6 * | 5 | B62D5/04 |
| A | * paragraphs [0014], [0016], [0025], [0027], [0043] * | 7 | |
| | ----- | | |
| Y | EP 2 003 035 A2 (TOYOTA CHUO KENKYUSHO KK [JP]; TOYOTA MOTOR CO LTD [JP] ET AL.) 17 December 2008 (2008-12-17) * figures 1-5 * * paragraphs [0141], [0142] * | 5 | |
| | ----- | | |
| A | DE 693 00 266 T2 (TOYOTA MOTOR CO LTD [JP]) 4 January 1996 (1996-01-04) * figure 4 * * paragraph [0027] * | 9,10 | |
| | ----- | | |
| A | DE 10 2008 049918 A1 (AUDI AG [DE]) 9 April 2009 (2009-04-09) * figures 1,2 * * paragraphs [0024], [0025], [0046] * | 1,2, 13-15 | TECHNICAL FIELDS SEARCHED (IPC) |
| | ----- | | |
| A | EP 2 233 384 A2 (AUDI AG [DE]) 29 September 2010 (2010-09-29) * claim 1; figures 1,2 * * paragraphs [0010], [0018] * | 1,2, 13-15 | B62D B60G |
| | ----- | | |

The present search report has been drawn up for all claims

| Place of search | Date of completion of the search | Examiner |
|---|---|---|
| The Hague | 1 June 2023 | Altmann, Bernhard |

EPO FORM 1503 03.82 (P04C01)

## ANNEX TO THE EUROPEAN SEARCH REPORT
## ON EUROPEAN PATENT APPLICATION NO.

EP 22 21 5453

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2023

| Patent document cited in search report | | Publication date | Patent family member(s) | | Publication date |
|---|---|---|---|---|---|
| US 2018056986 | A1 | 01-03-2018 | CN | 107776664 A | 09-03-2018 |
| | | | DE | 102017119215 A1 | 01-03-2018 |
| | | | GB | 2553429 A | 07-03-2018 |
| | | | RU | 2017129555 A | 21-02-2019 |
| | | | US | 2018056986 A1 | 01-03-2018 |
| EP 2003035 | A2 | 17-12-2008 | CN | 101400558 A | 01-04-2009 |
| | | | EP | 2003035 A2 | 17-12-2008 |
| | | | JP | 4781882 B2 | 28-09-2011 |
| | | | JP | 2007269294 A | 18-10-2007 |
| | | | US | 2009063002 A1 | 05-03-2009 |
| | | | WO | 2007114299 A1 | 11-10-2007 |
| DE 69300266 | T2 | 04-01-1996 | DE | 69300266 T2 | 04-01-1996 |
| | | | EP | 0553627 A1 | 04-08-1993 |
| | | | JP | 3052537 B2 | 12-06-2000 |
| | | | JP | H05201345 A | 10-08-1993 |
| | | | US | 5561603 A | 01-10-1996 |
| DE 102008049918 A1 | | 09-04-2009 | NONE | | |
| EP 2233384 | A2 | 29-09-2010 | DE | 102009013246 A1 | 16-09-2010 |
| | | | EP | 2233384 A2 | 29-09-2010 |

EPO FORM P0459

For more details about this annex : see Official Journal of the European Patent Office, No. 12/82